Europäisches Patentamt

European Patent Office

Office européen des brevets

(19)

(11) Publication number: **0 188 909**
A2

(12) **EUROPEAN PATENT APPLICATION**

(21) Application number: 85309367.2

(22) Date of filing: 20.12.85

(51) Int. Cl.⁴: **G 01 L 19/02**

(30) Priority: 21.12.84 US 684649

(43) Date of publication of application: 30.07.86
Bulletin 86/31

(84) Designated Contracting States: DE FR GB IT

(71) Applicant: **THE GARRETT CORPORATION,**
9851-9951 Sepulveda Boulevard P.O. Box 92248, Los
Angeles, California 90009 (US)

(72) Inventor: **Atkinson, William, 2103 Gaucho Drive, Palos
Verdes Estates California (US)**

(74) Representative: **Rees, David Christopher et al, Kilburn &
Strode 30 John Street, London WC1N 2DD (GB)**

(54) **Device and method for compensating for sensor error in system calculating dynamic pressure.**

(57)    A system for compensating for sensor calibration drift in systems calculating dynamic pressure for computing airspeed for low airspeed applications. During a preflight calibration mode, the same pressure is supplied both to a static pressure sensor (10) and to a total pressure sensor (12). The calculated apparent dynamic pressure therefore represents the calibration error and values of this are stored in a memory (16) at various static pressures. During a flight mode the dynamic pressure errors corresponding to static pressure at the operating location are used to provide a corrected dynamic pressure, which may then be used to provide an accurate indicated airspeed.

## DEVICE AND METHOD FOR COMPENSATING

## FOR SENSOR ERROR IN SYSTEM CALCULATING

### DYNAMIC PRESSURE

The present invention relates to a device and method for compensating for sensor error in a system calculating dynamic pressure. Such systems may be used in calculating aircraft airspeed.

Considerable effort has been devoted to developing electromechanical systems for converting absolute pressure signals such as static pressure and total pressure into information such as aircraft indicated airspeed, which is supplied to flight personnel. The various attempts have included techniques and apparatus for compensating for certain errors occurring in the measurements and calculations used to provide the flight information. However, the emphasis has been placed on providing compensation for errors resulting from the compressibility of the air in which the aircraft is flying, which errors become quite severe at speeds of 200 miles per hour and above.

Generally speaking, aircraft indicated airspeed (IAS) is derived from dynamic pressure ($Q_C$), with the approximate relationship being expressed in the formula IAS $= K\sqrt{Q_C}$, where K is a constant. Dynamic pressure $Q_C$ is derived from the total pressure $P_T$ and the static pressure $P_S$, and may be expressed by the formula $Q_C = P_T - P_S$.

At low airspeeds, the dynamic pressure $Q_C$ will be very low since $P_T$ and $P_S$ are approximately equal, and therefore even small errors in the total pressure $P_T$ and the static pressure $P_S$ will result in relatively large errors in the calculated value of the dynamic pressure $Q_C$, hence in the aircraft indicated airspeed IAS.

As stated above, past efforts at providing corrections to air data apparatus have concentrated on correcting errors resulting from aircraft travelling at higher speeds at which the air becomes compressed. Examples of such apparatus are numerous, with representative samples being United States Patent No. 3,135,861, to Burggren et al, and United States Patent No. 3,132,244, to Kemmer et al. Such apparatus provides no compensation for errors resulting due to sensor calibration drift, which errors are only severe at low speeds and are essentially unimportant in the type of high speed accuracy the above examples are concerned with.

However, there are a number of aircraft operating at low speed in which accurate low speed information is required, including particularly helicopters, short takeoff and landing (STOL) aircraft and vertical takeoff and landing (VTOL) aircraft. Examples of such aircraft in which accurate low air speed information is vital include jump jets such as the Harrier type of aircraft using vectored-thrust and frequently operating in combat situations at fairly low speeds, and the tiltrotor type of aircraft currently being considered for use as a shortrange tactical aircraft. Calibration schemes which do not take into account calibration drift are unacceptable for such applications in that accurate low air speed information is vital to the operation of such aircraft.

It is therefore an object of the present inventoin to provide a scheme for accuratlly calibrating pressure sensors used in providing such low airspeed information.

According to the present invention, there is provided a device to compensate for sensor error in a system calculating dynamic pressure, comprising: a static pressure sensor for providing a static pressure signal representing a static pressure sensed, a total pressure sensor for providing a total pressure signal representing a total pressure sensed, and a summing device for calculating from the first and second outputs, a dymanic pressure signal representing a dynamic pressure, characterised by means for supplying a pressure schedule to both the static and total pressure sensors during a calibration mode; a memory device for storing values of the dynamic pressure signal together with the corresponding values of the static pressure signal during the calibration mode, the memory device providing, at a time other than during the calibration mode, an error signal comprising the stored value of the dynamic pressure signal corresponding to the current value of the static pressure signal at that time; and means for deriving a compensated dynamic pressure from the calculated dynamic. pressure signal and the error signal.

The present invention calibrates the pressure sensors in real time by entering a preflight calibration mode in which various values of dynamic pressure $Q_C$ error are stored in a memory together with corresponding values of the static pressure $P_S$. This is accomplished by providing an identical variable pressure input to the static pressure $P_S$ sensor and the total pressure $P_T$ sensor, which should result in a zero value for dynamic presure $Q_C$. Accordingly, values of $Q_C$ resulting as static pressure $P_S$ is varied are actual errors, and these values of $Q_C$ are stored in the memory together with corresponding values of $P_S$.

During a flight mode following calibration of the sensors, values of $Q_C$ error obtained in the preflight calibration mode and stored in a memory may then be subtracted from calculated values of dynamic pressure $Q_C$, resulting in a corrected dynamic pressure $Q_C$ signal which may then be converted into indicated airspeed IAS, which is provided to the pilot. Accordingly, by using this scheme errors resulting from sensor calibration drift may be minimised. The effect is an adjustment of slope and/or offset, resulting in a much more accurate calculation or aircraft indicated airspeed IAS. The technique taught by the present invention is simple to implement, and would preferably be included in a central air data computer (CADC).

Preferably, the memory device is a RAM memory which may be stored in a central air data computer. Thus, the device may be combined with apparatus for calculating indicated airspeed based on the value of the compensated dynamic pressure.

According to another aspect of the invention, there is provided a method of compensating for sensor error in a system calculating dynamic pressure by subtracting the output of a static pressure sensor from the output of a total pressure sensor, characterised by the steps of supplying a pressure schedule to both the static pressure sensor and the total pressure sensor; storing a plurality of values of calculated dynamic pressure, together with corresponding values of the output from the static pressure sensor, in a memory device during a calibration mode; providing as an output from the memory device, at a time other than during the calibration mode, an error signal comprising the stored value of the dynamic pressure corresponding to the current value of the output from the static pressure sensor at that time; and calculating a compensated dynamic pressure value by subtracting the output of the memory device from the current value of the calculated dynamic pressure.

Preferably, the pressure schedule is varied from a pressure corresponding to ambient air pressure at zero altitude to a pressure corresponding to ambient air pressure at the maximum altitude of operation of the system. The calibration mode may be enacted prior to each time the system is operated.

A preferred device according to the invention may therefore comprise: first means for producing a static pressure signal; second means for producing a total pressure signal; third means for producing a dynamic pressure signal from the static pressure signal and the total pressure signal; fourth means for storing a plurality of dynamic pressure error signals corresponding to various static pressure signals, the fourth means producing as an output a dynamic pressure error signal corresponding to the static pressure signal; and fifth means for calculating a corrected dynamic pressure signal from the dynamic pressure signal and the dynamic pressure error signal output by said fourth means.

The present invention may be carried into practice in various ways and one embodiment will now be described with reference to the accompanying drawings in which

Figure 1 is a schematic block diagram illustrating the present invention in the preflight calibration mode; and

Figure 2 is a schematic block diagram illustrating the present invention in a flight mode.

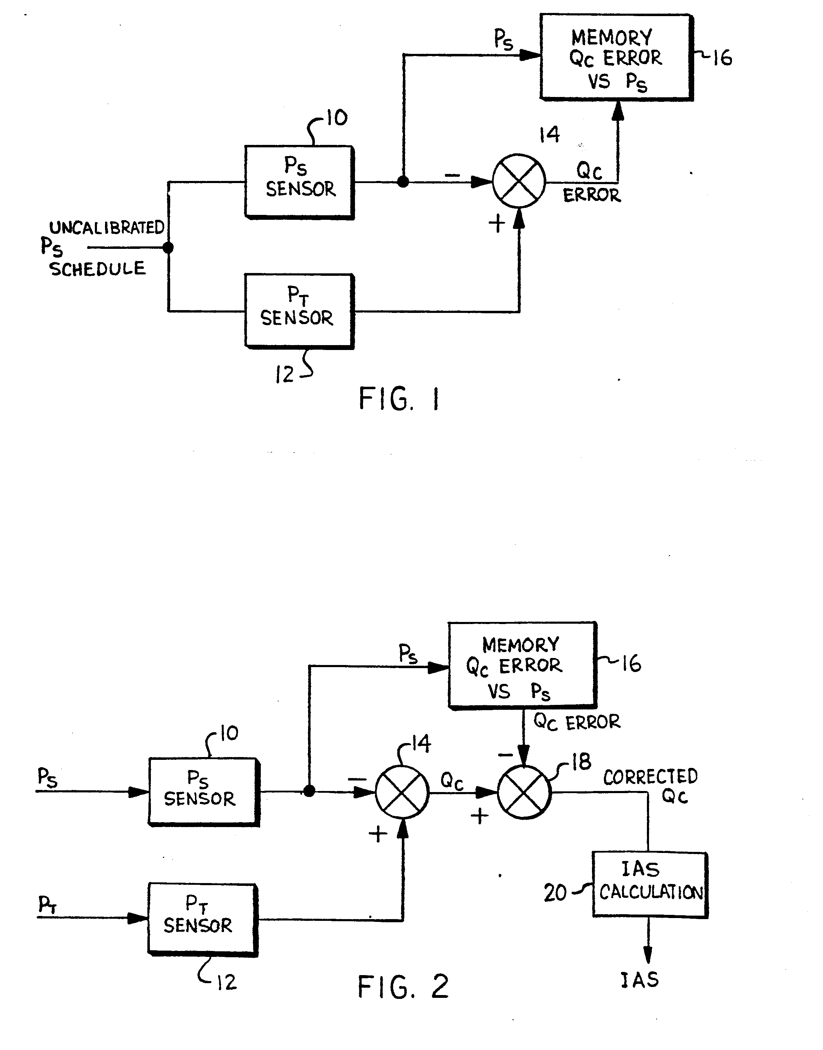

Figure 1 illustrates the preflight calibration mode of the present invention. In the preflight calibration mode, the pressure input to a static pressure $P_S$ sensor 10 and a total pressure $P_T$ sensor 12, which would normally be connected by tubing to a pneumatic pitot static tube located on the exterior of the aircraft, are connected together so that they may be supplied with an uncalibrated $P_S$ schedule. The $P_S$ sensor 10 and the $P_T$ sensor 12 supply electrical outputs indicative of the pressures sensed therein to a summer 14 used to calculate dynamic pressure $Q_C$ according to the formula $Q_C = P_T - P_S$. The dynamic pressure $Q_C$ so calculated will contain errors resulting from sensor calibration drift. The dynamic pressure $Q_C$, together with the output $P_S$ from the $P_S$ sensor 10, is supplied to a memory 16, which is used to store values in the preflight calibration mode. In the preferred embodiment, the memory 16 is a RAM-type memory and would be contained in the central air data computer (CADC).

As the pressure supplied by the uncalibrated $P_S$ schedule to the $P_S$ sensor 10 and the $P_T$ sensor 12 is varied from a maximum value to a minimum value, a number of values of $Q_C$ are stored in the memory 16, together with the value of $P_S$ corresponding to each value of $Q_C$. Since when the pressure supplied to the $P_S$ sensor 10 and the $P_T$ sensor 12 are equal, $Q_C$ should equal zero, the values of $Q_C$ supplied to the memory are values corresponding to the error in $Q_C$ for the value of $P_S$.

The uncalibrated $P_S$ schedule generally represents various altitudes from zero altitude (sea level) to maximum altitude of the aircraft. Depending on the degree of accuracy desired, the number of values stored in the memory 16 may be varied, with an increased number of values being stored for increasingly more accurate airspeed computation. The preflight calibration mode illustrated in Figure 1 may be performed as part of preflight routine, thereby calibrating the sensors prior to each flight. In this way, changes in the sensors over even relatively short periods of time may be compensated for in the computation of airspeed.

Moving now to Figure 2, the configuration of the system in a flight mode is illustrated, in which the $P_S$ sensor 10 is supplied with pressure $P_S$ from a pitot probe contained within the aircraft, and the $P_T$ sensor 12 is supplied with pressure from a probe outside the aircraft. The summer 14 computes a value of $Q_C$ which will contain errors resulting from sensor calibration drift. The memory 16 monitors the $P_S$ signal provided by the $P_S$ sensor 10, and produces as an output the value of error of $Q_C$ stored in the memory in the preflight calibration mode for that particular value of $P_S$.

The value of $Q_C$ from the summer 14 is supplied to a second summer 18, which subtracts the error of $Q_C$ supplied by the memory 16 for the given value of $P_S$, producing as an output a corrected value of $Q_C$. This corrected value of $Q_C$ may then be supplied to an IAS calculation device 20, which calculates IAS according to the formula $IAS = K\sqrt{Q_C}$. The value of IAS so produced is highly accurate, even in the low speed applications described above, thereby providing a more useful indication of airspeed than was previously available at low airspeeds.

The present invention thereby provides a desirable correction to pressure sensor calibration drift in apparatus used to provide airspeed indication at low airspeeds. Implementation of this system is relatively simple, with most of the system being preferably located in the central air data computer. Given the ecomonical cost of implementation of the present invention, it may be considered a truly advantageous system for providing a highly accurate airspeed indication on aircraft operated in low airspeed applications.

CLAIMS

1.    A device to compensate for sensor error in a system calculating dynamic pressure, comprising: a static pressure sensor (10) for providing a static pressure signal representing a static pressure sensed, a total pressure sensor (12) for providing a total pressure signal representing a total pressure sensed, and a summing device (14) for calculating from the first and second outputs, a dynamic pressure signal representing a dynamic  pressure, characterised by means for supplying a pressure schedule to both the static and total pressure sensors during a calibration mode; a memory device (16)  for storing values of the dynamic  pressure signal together with the corresponding values of the static pressure signal during the calibration mode, the memory device providing, at a time other than during the calibration mode, an error signal comprising the stored value of the dynamic pressure signal corresponding to the current value of the static pressure signal at that time; and means (18) for deriving a compensated dynamic pressure from the calculated dynamic pressure signal and the error signal.

2.    A device as claimed in Claim 1, characterised in that the memory device is a RAM memory.

3.    A device as claimed in Claim 2, characterised in that the RAM memory is contained in a central air data computer.

4. A device as claimed in any preceding claim characterised by its combination with means for calculating indicated airspeed based on the value of the compensated dynamic pressure.

5. A method of compensating for sensor error in a system calculating dymanic pressure by subtracting the output of a static pressure sensor from the output of a total pressure sensor, characterised by the steps of: supplying a pressure schedule to both the static pressure sensor and the total pressure sensor; storing a plurality of values of calculated dynamic pressure, together with corresponding values of the output from the static pressure sensor, in a memory device during a calibration mode; providing as an output from the memory device, at a time other than during the calibratioon mode, an error signal comprising the stored value of the dynamic pressure corresponding to the current value of the output from the static pressure sensor at that time; and calculating a compensated dynamic pressure value by subtracting the output of he memory device from the current value of the calculated dynamic pressure.

6. A method as claimed in Claim 5 characterised in that the pressure schedule is varied from a pressure corresponding to ambient air pressure at zero altitude to a pressure corresponding to ambient air pressure at the maximum altitude of operation of the system.

7. A method as claimed in Claim 6 characterised in that the calibration mode is enacted prior to each time the system is to be operated.

8.    A method as claimed in any of Claims 5
to 7 characterised in that the values of calculated
dynamic pressure are stored in a RAM memory.

9.    A method as claimed in Claim 8 characterised
in that the RAM memory is contained within a central
air data computer.

10.   A method as claimed in any of Claims 5
to 9 characterised by the further step of calculating
indicated airspeed from the value of compensated
dynamic pressure calculated.

0188909

FIG. 1

FIG. 2